# EUROPÄISCHE PATENTANMELDUNG

(11) **EP 3 517 917 A1**
(43) Veröffentlichungstag der Anmeldung: **31.07.2019**
(21) Anmeldenummer: 19152009.7
(22) Anmeldetag: 16.01.2019
(51) Int. Cl.: G01L 5/10

(54) **MESSVORRICHTUNG ZUM ERFASSEN VON MESSWERTEN ZUR MESSUNG EINER ZUGSPANNUNG IN EINEM FÖRDERSYSTEM, SOWIE FÖRDEREINHEIT UND FÖRDERANLAGE**

(30) Priorität: 26.01.2018 CH 962018
(71) Anmelder: FERAG AG, 8340 Hinwil (CH)
(72) Erfinder: MÄDER, Carl Conrad, 8335 Hittnau (CH)
(74) Vertreter: Frei Patent Attorneys

(57) **Zusammenfassung**

Eine **Messvorrichtung** (43) dient zum Erfassen von Messwerten zur Messung einer Zugspannung in einem Fördersystem. Die Messvorrichtung (43) ist dazu ausgebildet, ein Förderorgan (7) von einem ersten Abschnitt der Messvorrichtung (43) zu einem zweiten Abschnitt der Messvorrichtung (43) zu führen,
eine Auslenkung des Förderorgans (7) bezüglich einer geraden Verbindung zwischen dem ersten und dem zweiten Abschnitt zu bewirken und
Messwerte entsprechend einer Reaktionskraft auf diese Auslenkung zu erfassen. Dabei weist die Messvorrichtung (43) Flächen zum Führen von Rollen des Förderorgans (7) auf. Eine dieser Flächen ist eine Auslenkfläche zum Auslenken des Förderorgans (7). Die Auslenkfläche ist an einem Auslenkelement (92) eines Messelements (91) ausgebildet, und die Reaktionskraft ist eine auf das Messelement (91) wirkende Kraft.

## Beschreibung

Die Erfindung bezieht sich auf das Gebiet der Fördertechnik, und insbesondere auf eine Messvorrichtung zum Erfassen von Messwerten zur Messung einer Zugspannung in einem Fördersystem, eine Fördereinheit und eine Förderanlage.

In Logistikeinrichtungen können lange Fördereinheiten vorliegen, auch über Kilometer, beispielsweise als Teil von Sorterförderem. Sie können wechselnden Lasten ausgesetzt sein und aufwärts und abwärts geführt werden. Zum Antrieb von entsprechend langen Förderorganen, beispielsweise mit verketten Fördergliedern, können mehrere Antriebe entlang einer Fördereinheit angeordnet sein. Die von diesen Antrieben auf das Förderorgan ausgeübten Antriebskräfte müssen aufeinander abgestimmt sein, damit das Förderorgan einerseits mit der erforderlichen Geschwindigkeit bewegt wird, und andererseits nicht lokal hohe Belastungen auftreten, welche im Extremfall das Förderorgan zerstören können, oder mindestens zu einer übermässigen Belastung und Verschleiss des Förderorgans führen können.

In WO 2014/166004 A1 ist ein Verfahren zu Regelung von Antrieben von Förderabschnitten eines Fördersystem beschrieben, welches diesen Anforderungen Rechnung trägt. Das Verfahren kann eine Messung der Belastung des Fördersystems als Grundlage der Regelung verwenden.

Es sind Verfahren bekannt, in denen ein Sensor als Teil des Förderorgans ausgeführt ist und mit dem Förderorgan mitbewegt ist. Sensordaten werden drahtlos an eine Steuerung übermittelt. Es ist damit aber nicht möglich, eine kontinuierliche Messung der Spannung des Förderorgans an einer bestimmten Stelle der Förderbahn zu erhalten.

Aufgabe der Erfindung ist, eine **Messvorrichtung** zum Erfassen von Messwerten zur Messung einer Zugspannung in einem Fördersystem zu schaffen, welche eine verbesserte Messung ermöglicht, sowie entsprechende **Fördereinheit** und eine **Förderanlage.**

Diese Aufgabe lösen eine Messvorrichtung, eine Fördereinheit und eine Förderanlage mit den Merkmalen der Patentansprüche.

Eine **Messvorrichtung** dient zum Erfassen von Messwerten zur Messung einer Zugspannung in einem Fördersystem. Die Messvorrichtung ist dazu ausgebildet,
- ein Förderorgan von einem ersten Abschnitt der Messvorrichtung zu einem zweiten Abschnitt der Messvorrichtung zu führen,
- eine Auslenkung des Förderorgans bezüglich einer geraden Verbindung zwischen dem ersten und dem zweiten Abschnitt zu bewirken und
- Messwerte entsprechend einer Reaktionskraft auf diese Auslenkung zu erfassen.
Dabei weist die Messvorrichtung Flächen zum Führen von Rollen des Förderorgans auf. Eine dieser Flächen ist eine Auslenkfläche zum Auslenken des Förderorgans. Die Auslenkfläche ist an einem Auslenkelement eines Messelements ausgebildet, und die Reaktionskraft ist eine auf das Messelement wirkende Kraft.

Aus dem genannten Messwert entsprechend der Reaktionskraft kann die Zugspannung bestimmt werden. Die Zugspannung entspricht auch einer Zugkraft, die zwischen Elementen des Förderorgans wirkt.

Die so bestimmte Zugspannung wird im Folgenden als gemessene Zugspannung bezeichnet. Mit der gemessenen Zugspannung kann die Zugspannung des Förderorgans geregelt werden, so dass sie über die ganze Länge des Förderorgans ausgeglichen ist. Insbesondere kann sie so geregelt werden, dass mittels eines oder mehrerer Antriebe, die am Förderorgan angreifen, insgesamt eine möglichst kleine Kraft auf das Förderorgan ausgeübt wird - gerade genug, um es in Bewegung zu halten. Damit wird die mechanische Belastung des Förderorgans minimiert, was wiederum seinen Verschleiss reduziert und die Lebensdauer erhöht. Ferner wird die Antriebsenergie klein gehalten und mindestens annähernd minimiert.

Die Messvorrichtung lässt sich einsetzen bei Förderern mit Förderorganen aus verketteten Fördergliedern. Solche sind beispielsweise Plattenförderer, Greiferförderer, Schalenförderer, Modulbandförderer, Taschenförderer, Hängeförderer.

In Ausführungsformen weist die Messvorrichtung einen Führungskanal zum Führen des Förderorgans auf.

Die Messvorrichtung ist also dazu ausgebildet, das Förderorgan zu führen und in einer definierten, insbesondere gleichbleibenden relativen Lage zum Messelement zu halten. Dies steht im Gegensatz zu einer Anordnung in welcher beispielsweise ein Förderorgan an einem Messelement anliegt, aber beispielsweise in eine Richtung quer zur Bewegungsrichtung des Förderorgans, auch Förderrichtung genannt, beweglich bleibt.

In Ausführungsformen weist der Führungskanal Flächen zum Führen des Förderorgans in horizontaler Richtung auf.

Damit kann eine in horizontale Richtung definierte und gleichbleibende relative Lage des Förderorgans zum Messelement erreicht werden.

In Ausführungsformen weist der Führungskanal Flächen zum Führen des Förderorgans in vertikaler Richtung auf.

Damit kann eine in vertikale Richtung definierte und gleichbleibende relative Lage des Förderorgans zum Messelement erreicht werden.

In Ausführungsformen liegen eine vertikale und eine horizontale Führung vor.

In Ausführungsformen ist die Messvorrichtung dazu ausgebildet, die Auslenkung des Förderorgans in horizontaler Richtung zu bewirken. Dabei ist die Reaktionskraft - verglichen mit einer Auslenkung in vertikaler Richtung - im Wesentlichen unabhängig vom Gewicht des Förderorgans und geförderter Gegenstände.

In Ausführungsformen ist die Messvorrichtung dazu ausgebildet, die Auslenkung des Förderorgans in vertikaler Richtung zu bewirken. Dabei ist die Reaktionskraft abhängig vom Gewicht des Förderorgans und geförderter Gegenstände.

In Ausführungsformen ist die Messvorrichtung zur Zwangsführung des Förderorgans ausgebildet.

Bei einer Zwangsführung in horizontaler Richtung verläuft beispielsweise zwischen einem Anfang und einem Ende des Messabschnitts ein Abschnitt der Förderbahn, in welchem das Förderorgan bezüglich Bewegung in horizontaler Richtung von beiden Seiten geführt ist.

Bei einer Zwangsführung in vertikaler Richtung verläuft beispielsweise zwischen einem Anfang und einem Ende des Messabschnitts ein Abschnitt der Förderbahn, in welchem das Förderorgan bezüglich Bewegung in vertikaler Richtung von oben und unten geführt ist.

In Ausführungsformen weist die Messvorrichtung einen oder mehrere Messwertgeber zur Bestimmung der Messwerte auf, und sind die einen oder mehreren Messwertgeber zur berührungslosen Messung einer Position des Messelements bezüglich eines Referenzelements angeordnet.

Solche berührungslose Messwertgeber sind wartungsarm, robust und unempfindlich gegen Verschmutzung. Sie weisen eine hohe Beständigkeit gegenüber langzeit-Wechselbelastungen auf.

Eine **Fördereinheit** weist eine Förderbahn mit einem darin geführten Förderorgan auf, und mindestens eine Messvorrichtung zur Messung einer Zugspannung im Förderorgan.

Eine Förderbahn, in welcher die Messvorrichtung eingesetzt und zur Regelung eines oder mehrere Antriebe verwendet wird, kann aufsteigende und absteigende Förderabschnitte aufweisen. In den aufsteigenden Förderabschnitten wird das Förderorgan durch die Antriebe angetrieben, in den absteigenden durch die Schwerkraft. Die Antriebe können das Förderorgan durch die Förderbahn ziehen und/oder stossen.

In Ausführungsformen weist die Förderbahn einen geraden Abschnitt auf und ist die Messvorrichtung in einem Messabschnitt in diesem geraden Abschnitt angeordnet, wobei die Auslenkung das Förderorgan aus einer ansonsten geraden Bahn auslenkt. In Ausführungsformen weist das Förderorgan miteinander verkettete Förderglieder auf, und weist ein Förderglied Rollen zur Stützung und zur Führung der Förderglieder in der Förderbahn auf.

In Ausführungsformen sind Rollen, welche am Auslenkelement des Messelements abrollen, Führungsrollen, welche eine seitliche Führung der Förderglieder in einer Förderbahn bewirken.

Eine Auslenkung des Förderorgans respektive der Förderglieder mittels der Führungsrollen geschieht in eine horizontale Richtung.

In Ausführungsformen sind Rollen, welche am Auslenkelement des Messelements abrollen, Laufrollen, welche eine stützende Führung der Förderglieder in einer Förderbahn bewirken.

Eine Auslenkung des Förderorgans respektive der Förderglieder mittels der Laufrollen geschieht in eine vertikale Richtung, also aufwärts oder abwärts.

In Ausführungsformen liegen im Betrieb der Messvorrichtung zu jedem Zeitpunkt mindestens zwei Förderglieder mit ihren Rollen am Messelement an.

In anderen Ausführungsformen liegen genau drei oder genau vier Förderglieder mit ihren Rollen am Messelement an.

In Ausführungsformen sind die Förderglieder jeweils Elemente eines Plattenförderers oder Greiferförderers oder Schalenförderers oder Modulbandförderers oder Taschenförderers oder Hängeförderers.

**Eine Förderanlage** weist mindestens auf: eine Fördereinheit mit einem Förderorgan, mindestens eine Messvorrichtung zur Messung einer Zugspannung im Förderorgan, mindestens einen Antrieb, und eine Steuerung, welche dazu ausgebildet ist, den mindestens einen Antrieb nach Massgabe von Messwerten der mindestens einen Messvorrichtung zu regeln.

Weitere bevorzugte Ausführungsformen gehen aus den abhängigen Patentansprüchen hervor.

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: ein Fördersystem mit mehreren Antrieben und dazwischen liegenden Förderabschnitten;
- Figur 2: ein Förderorgan mit Fördergliedern;
- Figur 3: eine Messvorrichtung in einem Messabschnitt einer Förderbahn;
- Figur 4: an einem Förderglied angreifende Kräfte und Details einer Messvorrichtung;
- Figur 5: an einem Förderglied auftretende Kräfte
- Figur 6 - 8: Ausführungsformen von Messvorrichtungen im Querschnitt;
- Figur 9 - 12: verschiedene Anordnungen von Messvorrichtungen und Förderbahnen.

Grundsätzlich sind in den Figuren gleiche Teile mit gleichen Bezugszeichen versehen.

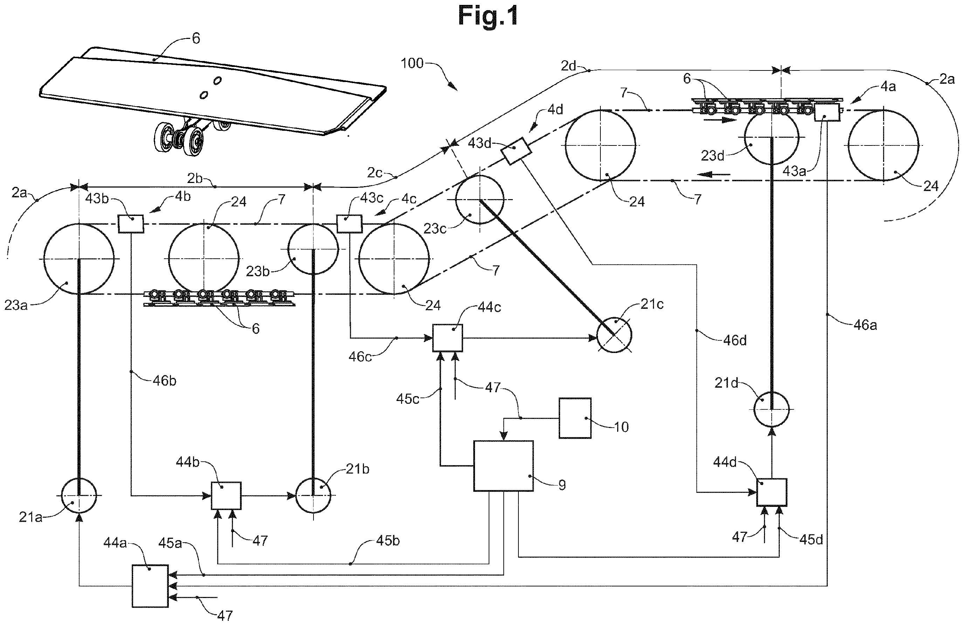

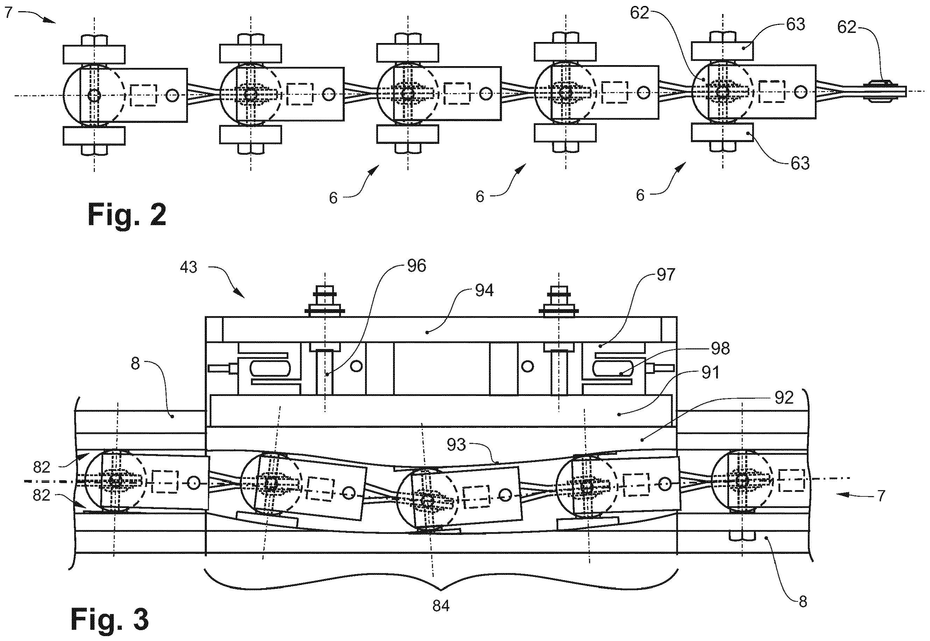

Figur 1 zeigt ein Fördersystem 100 mit einem umlaufenden Förderorgan 7, welches von mehreren Antrieben 21a, 21b, 21c, 21d angetrieben ist, wodurch zwischen den Antrieben liegende Förderabschnitte 2a, 2b, 2c, 2d definiert sind. Das Förderorgan 7 ist ein umlaufendes Förderorgan mit beispielhaft Plattenelementen als Förderglieder 6, die miteinander verkettet sind, oder mittels eines Zugmittels gezogen sind. Das Förderorgan 7 läuft, durch mitlaufende, nicht angetriebene Rollen 24, worunter auch Umlenkrollen sind, geführt um seine Umlaufbahn (deren Verlauf mit strichlierten Linien schematisch dargestellt ist). An mehreren Stellen der Umlaufbahn sind Vorrichtungen zur Krafteinleitung 23a, 23b, 23c, 23d angeordnet, welche das Förderorgan antreiben. Dies sind beispielsweise Zahnräder oder Nockenräder. Sie wirken beispielsweise in einem Umlenkantrieb oder in einem Schleppantrieb. Diese Krafteinleitungen 23a, 23b, 23c, 23d sind jeweils durch Antriebe 21a, 21b, 21c, 21d angetrieben. Die Antriebe 21a, 21b, 21c, 21d sind beispielsweise Elektromotoren, insbesondere Asynchronmotoren. Durch die Anordnung der Krafteinleitungen 23a, 23b, 23c, 23d ist die Umlaufbahn des Förderorgans 7 in mehrere Förderabschnitte 2a, 2b, 2c, 2d unterteilt, wobei auch ein Rücktrum 2a als Förderabschnitt betrachtet werden kann. Jedem Förderabschnitt 2a, 2b, 2c, 2d kann ein Antrieb 21a, 21b, 21c, 21d zugeordnet sein. Der jeweils zugeordnete Antrieb 21a, 21b, 21c, 21d treibt das Förderorgan in diesem Förderabschnitt 2a, 2b, 2c, 2d über eine zugeordnete Krafteinleitung 23a, 23b, 23c, 23d an. In Bereichen, in welchen das Förderorgan 7 durch die Antriebe gezogen wird, erstreckt sich ein Förderabschnitt 2a, 2b, 2c, 2d jeweils von einer zugeordneten Krafteinleitung 23a, 23b, 23c, 23d ausgehend entgegen der Förderrichtung bis zu einem Kopplungsbereich 4a, 4b, 4c, 4d, welcher unmittelbar nach der vorangehenden Krafteinleitung 23a, 23b, 23c, 23d liegt. In Bereichen, in welchen das Förderorgan 7 durch die Antriebe gestossen oder geschoben wird (in Figur 2 nicht dargestellt), erstreckt sich ein Förderabschnitt jeweils von einer zugeordneten Krafteinleitung ausgehend in Richtung der Förderrichtung bis zu einem Kopplungsbereich, welcher unmittelbar vor der nachfolgenden Krafteinleitung liegt. Der Kopplungsbereich 4a, 4b, 4c, 4d ist also jeweils der Bereich, in welchem ein Förderabschnitt 2a, 2b, 2c, 2d an den nachfolgenden oder vorangehenden Förderabschnitt 2a, 2b, 2c, 2d grenzt. In Bereichen, wo ein Antrieb in einem ersten Förderabschnitt zieht und in einem nachfolgenden Förderabschnitt stösst oder schiebt, ist der Antrieb beiden Förderabschnitten zugeordnet.

Zur Regelung des Antriebs jeweils eines Förderabschnittes 2a, 2b, 2c, 2d ist eine Messvorrichtung 43a, 43b, 43c, 43d angeordnet. Diese misst eine Belastung des Fördersystems
- in Abschnitten, in welchen das Förderorgan 7 gezogen wird, im Kopplungsbereich 4a, 4b, 4c, 4d zu Beginn des Förderabschnittes 2a, 2b, 2c, 2d, zwischen dem Förderabschnitt 2a, 2b, 2c, 2d und dem vorangehenden Förderabschnitt; oder,
- in Abschnitten, in welchen das Förderorgan 7 geschoben wird, im Kopplungsbereich am Ende des Förderabschnittes, zwischen dem Förderabschnitt und dem nachfolgenden Förderabschnitt.

Die Messvorrichtung 43a, 43b, 43c, 43d erzeugt ein Messsignal 46a, 46b, 46c, 46d, welches einer Belastung des Fördersystems im Kopplungsbereich 4a, 4b, 4c, 4d entspricht, beispielsweise einer zum Antrieb des Förderorgans 7 wirkenden Zugspannung oder Druckspannung. Die Messung selber kann durch Messung einer Kraft zum Auslenken des Förderorgans 7 geschehen, wie weiter unten beschrieben, oder mittels Sensoren, die mit dem Förderorgan 7 umlaufen und die Zug- oder Druckspannung im Förderorgan erfassen, und deren Messwerte jeweils im Kopplungsbereich 4a, 4b, 4c, 4d ausgelesen werden können und dadurch das Messsignal 46a, 46b, 46c, 46d bilden.

Eine jeweils einem Förderabschnitt 2a, 2b, 2c, 2d zugeordnete Regelvorrichtung 44a, 44b, 44c, 44d verarbeitet das dem Förderabschnitt 2a, 2b, 2c, 2d zugeordnete Messsignal 46a, 46b, 46c, 46d und regelt den zugeordneten Antrieb 21a, 21b, 21c, 21d.

Die Regelvorrichtung 44a, 44b, 44c, 44d kann einen Gesamtsollwert als Vorsteuerungssignal 47 verarbeiten. Der Gesamtsollwert kann für alle Regelvorrichtungen 44a, 44b, 44c, 44d des Fördersystems derselbe sein. Der Gesamtsollwert kann durch eine übergeordnete Steuerung 10 vorgegeben sein. Der Gesamtsollwert kann ein Sollwert für einen Takt, eine Frequenz oder eine Geschwindigkeit des Fördersystems als Ganzes sein.

Die Regelvorrichtung 44a, 44b, 44c, 44d kann einen Belastungssollwert für die jeweilige Belastung, im Folgenden einfach Sollwert 45a, 45b, 45c, 45d genannt, verarbeiten. Dieser Sollwert 45a, 45b, 45c, 45d kann durch eine Steuerung 9 des Fördersystems vorgegeben und geändert werden. Der Sollwert 45a, 45b, 45c, 45d kann aber auch als konstante Vorgabe in der Regelvorrichtung 44a, 44b, 44c, 44d gespeichert sein, oder er kann zeitvariabel sein und beispielsweise durch die Regelvorrichtung 44a, 44b, 44c, 44d nach Massgabe einer anderen Vorgabe, beispielsweise des Vorsteuerungssignals 47, modifiziert werden.

Die Funktionsweise der Regelvorrichtung 44 kann wie in der Publikation WO 2014/166004 A1 beschrieben sein.

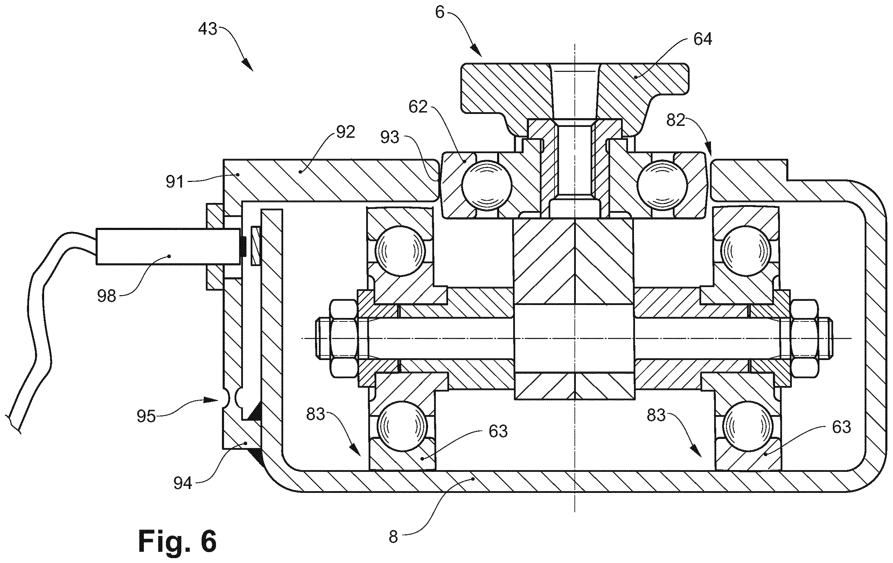

**Figur 2** zeigt eine Reihe von Fördergliedern 6 eines Förderorgans 7. Die Förderglieder 6 sind durch Kettenverbindungselemente 61, beispielsweise Kugelgelenke, miteinander verbunden. Durch die Kettenverbindungselement 61 können Zugkräfte und/oder Schubkräfte zwischen den Fördergliedern 6 übertragen werden. Querschnitte von Fördergliedern 6 und ihr Zusammenwirken mit einer Förderbahn 8 sind den **Figuren 6** bis **8** gezeigt. Ein Förderglied 6 weist jeweils eine Führungsrolle 62 oder Führungsrad auf und in der Regel zwei Laufrollen 63 oder Laufräder, sowie ein Verbindungselement 64 zur Verbindung mit einem Förderelement (nicht abgebildet). Die Führungsrollen 62 sind zwischen Führungsbereichen 82 der Förderbahn 8 geführt und können an Flächen respektive Führungsflächen dieser Führungsbereiche 82 abrollen. Die Laufrollen 63 rollen auf Abrollbereichen 83 der Förderbahn 8 ab. In der Regel, aber nicht zwingend an allen Stellen der Förderbahn 8, verläuft die Förderbahn 8 derart, dass die Schwerkraft die Laufrollen 63 gegen die Abrollbereiche 83 drückt. In der Regel sind Drehachsen der Laufrollen 63 orthogonal zu Drehachsen der Führungsrollen 62. Ein Förderelement kann beispielsweise eine Platte eines Plattenförderers sein, ein Greifer, eine Förderschale, etc.

**Figur 3** zeigt einen Messabschnitt 84 in einer Förderbahn 8 oder Umlaufbahn des Förderorgans 7. Im Messabschnitt 84 ist eine Messvorrichtung 43 angeordnet und bildet einen Teil der Förderbahn 8. Die Messvorrichtung 43 weist ein Messelement 91 auf. Ein Teil des Messelements 91 ist dem Förderorgan 7 zugewandt und bildet ein Auslenkelement 92. Das Auslenkelement 92 lenkt die Förderglieder 6 bezüglich einer geraden Verbindung durch den Messabschnitt 84 aus. Mit anderen Worten lenkt das Auslenkelement 92 das Förderorgan 7 bezüglich einer geraden Linie zwischen Anfang und Ende des Messabschnitts 84 aus. Die Führungsrollen 62 rollen auf einer Auslenkfläche des Auslenkelements 92 ab. Diese Auslenkfläche bildet einen Auslenkbereich 93 des Führungsbereichs 82. Dadurch resultiert, entsprechend einer Zugkraft im Förderorgan 7, eine Kraft der Förderglieder 6 gegen das Messelement 91. Das Messelement 91 ist zur Messung dieser Kraft angeordnet. Dazu kann es bezüglich eines Referenzelements 94 beweglich angeordnet sein, beispielsweise mittels einer beweglichen Verbindung 95. Die Verbindung 95 kann eine oder mehrere Führungen 96 und eine oder mehrere Federelemente 97 oder elastische Elemente aufweisen. Diese Führungen 96 und Federelemente 97 können separate Bauelemente sein, wie im Beispiel der **Figur 3****.** Oder sie können in einem oder mehreren Bauteilen gemeinsam verwirklicht sein, wie im Beispiel der **Figuren 6** bis **8****.** Einer oder mehrere Messwertgeber 98 sind zur Messung der Bewegung des Messelements 91 relativ zum Referenzelement 94 angeordnet. In der Ausführungsform der Figur 3 können der oder die Messwertgeber 98 Dehnmesssensoren an Federelementen 97 sein. Das Referenzelement 94 ist starr bezüglich der Förderbahn 8 montiert.

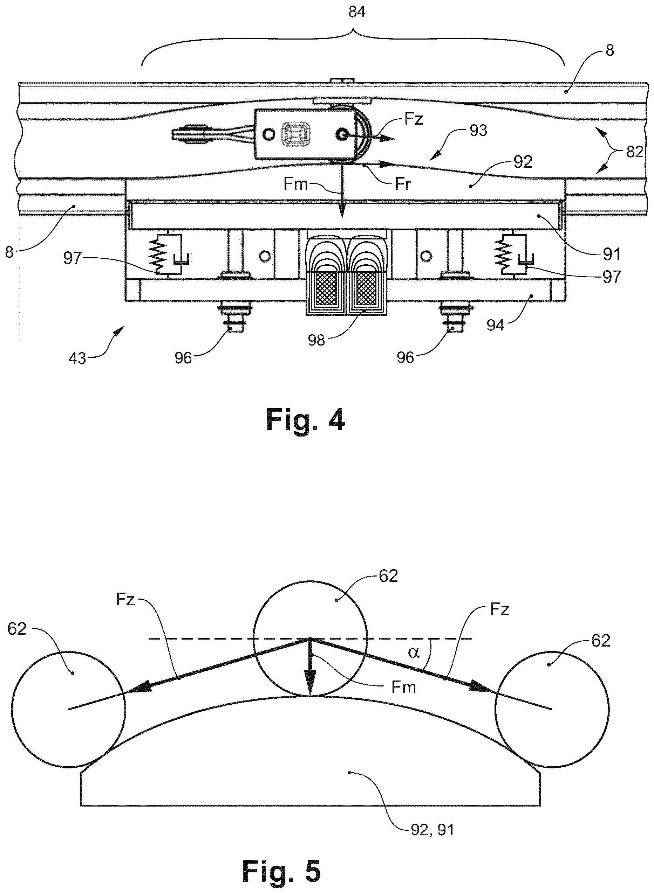

**Figur 4** zeigt grundsätzlich dieselben Elemente wie die vorangehende Figur, mit dem Unterschied, dass
- nur ein einziges Förderglied 6 eingezeichnet ist, zusammen mit daran angreifenden Kräften: Zugkraft Fz, gemessene Normalkraft Fm und Rollreibungskraft Fr; und
- die Federelemente 97 schematisch durch die Kombination einer idealen Feder und einer Dämpfung dargestellt sind; und
- der Messwertgeber 98 eine berührungslose Messung einer relativen Position von Messelement 91 und Referenzelement 94 realisiert, beispielsweise mit einem induktiven Sensor.

**Figur 5** zeigt schematisch die geometrischen Verhältnisse und auftretenden Kräfte beim Abrollen der Führungsrollen 62 entlang des Auslenkelements 92. Durch die Auslenkung der Führungsrollen 62 wird das Förderorgan 7 geknickt. In der gezeigten Lage liegt eine Führungsrolle 62 mittig am Auslenkelement 92 an. Zwischen zwei aufeinanderfolgenden Fördergliedern 6 liegt ein Winkel von 180°-2*alpha. Eine Zugkraft Fz, die auf das Förderglied 6 wirkt, ist in einem Winkel alpha zu einer Tangente an das Auslenkelement 92 im Punkt der Berührung der Führungsrolle 62 gerichtet. Die Zugkraft am Förderglied 6 entspricht einer Zugspannung, unter welcher das Förderorgan 7 steht. Für kleine Winkel alpha ist die Zugkraft annähernd gleich der Zugspannung. Die gemessene Normalkraft Fm, welche von der Führungsrolle 62 auf das Messelement 91 wirkt, beträgt Fm=Fz*2*sin(alpha).

Die gemessene Normalkraft variiert periodisch entsprechend der Lage der Förderglieder 6 respektive ihrer Rollen in Längsrichtung entlang des Messelements 91. Dies gilt unabhängig davon, ob eine, zwei, drei, vier oder mehr der Rollen gleichzeitig am Messelement 91 abrollen und somit zur gemessenen Normalkraft beitragen.

In Ausführungsformen kann, unabhängig von dieser Anzahl von Rollen, der Messwert, aus dem die Zugkraft respektive Zugspannung bestimmt wird, durch Filterung, insbesondere durch zeitliche Mittelung der gemessenen Normalkraft ermittelt werden.

Die Bestimmung der Zugkraft respektive Zugspannung kann durch eine gespeicherte Funktion oder Kennlinie aus diesem Messwert bestimmt werden. Die dabei verwendete Kennlinie kann spezifisch für eine gegebene Kombination von Förderorgan 7 und Messvorrichtung 43 bestimmt werden. Die Kennlinie kann davon abhängig sein, wie viele Förderglieder 6 respektive deren Rollen maximal oder im zeitlichen Durchschnitt jeweils am Messelement 91 abrollen.

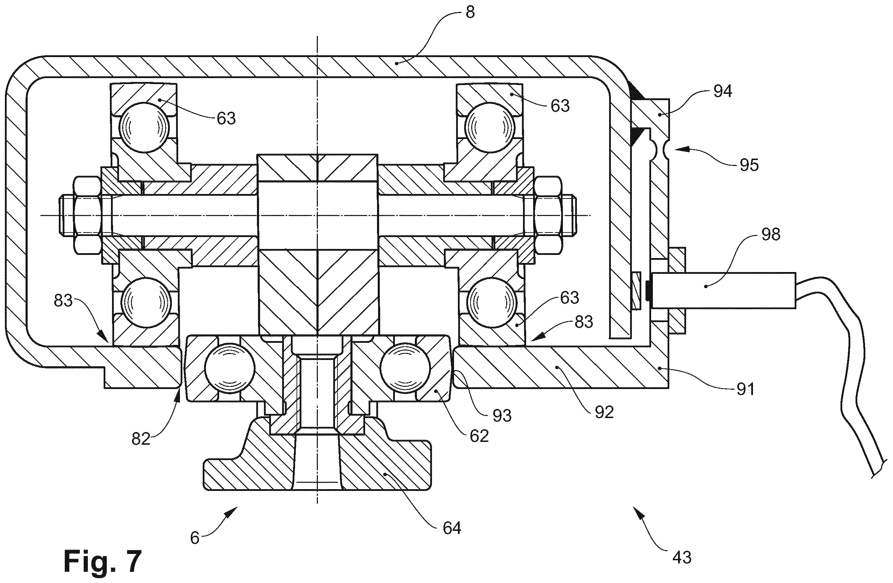

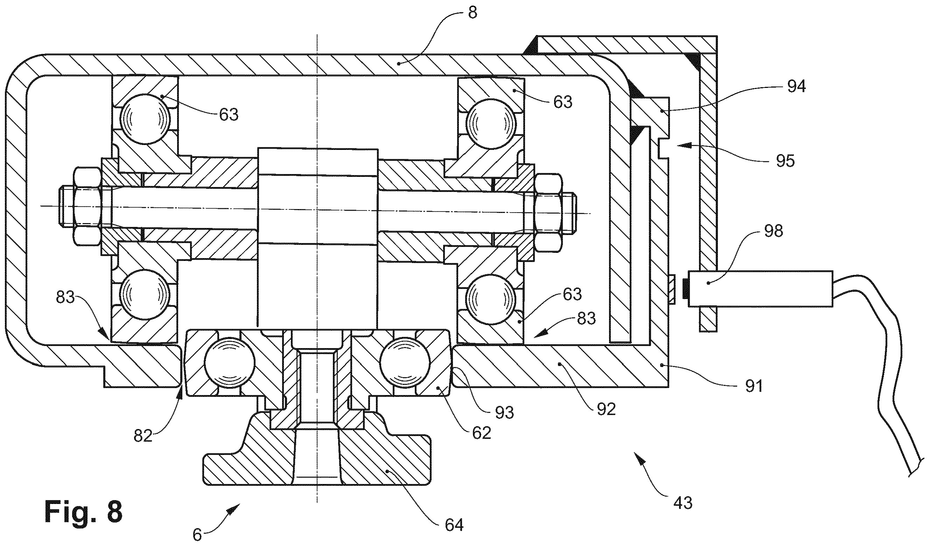

**Figuren 6** bis **8** zeigen verschiedene Ausführungsformen von Messvorrichtungen 43 im Querschnitt. Einzelne Elemente davon sind bereits oben beschrieben. Die Verbindung 95 ist hier durch ein einziges Element realisiert, welches die Funktion der Führung 96 und des Federelements 97 in sich vereint. Hier ist dies eine Einschnürung zwischen Referenzelement 94 und Messelement 91. Dabei können Referenzelement 94 und Messelement 91 als Abschnitte eines einstückigen Bauteils ausgebildet sein. Insbesondere kann dieses ein Abschnitt eines Profilelements sein, beispielsweise eines L-förmigen Profilelementes. Dieses weist zwei Arme auf. Ein äusseres Ende eines ersten Armes bildet das Messelement 91 und das Auslenkelement 92 mit dem Auslenkbereich 93, welches zum Abrollen der Führungsrollen 62 ausgebildet ist. Ein äusseres Ende des zweiten Armes ist an der Förderbahn 8 befestigt. Diese Befestigung kann beweglich sein, insbesondere elastisch. Und/oder, wie in den Figuren gezeigt, kann die Befestigung starr sein und angrenzend an die Befestigung die Einschnürung in Längsrichtung des Profilelementes verlaufen. Die Einschnürung bildet die elastische Verbindung 95 zwischen Referenzelement 94 und Messelement 91. Das Verbindungselement 64 kann - im montierten und betriebsbereiten Zustand der Vorrichtung - an einer Oberseite des Förderglieds 6 liegen, wie in der **Figur 6****.** Oder es kann unterhalb liegen, wie in den **Figuren 7** und **8****.** Dabei liegen auch die (nicht gezeichneten) Förderelemente oberhalb respektive unterhalb der Förderglieder 6 und der Förderbahn 8. In den Ausführungsformen der **Figuren 6** und **7** ist der Messwertgeber 98 am Messelement 91 befestigt, wird mit diesem mitbewegt, und misst die Position des Referenzelements 94 relativ zum Messelement 91. Das Referenzelement 94 kann Teil der Förderbahn 8 sein. In den Ausführungsformen der **Figur 8** ist der Messwertgeber 98 am Referenzelement 94 befestigt und misst die Position des bewegten Messelements 91 relativ zum Referenzelement 94.

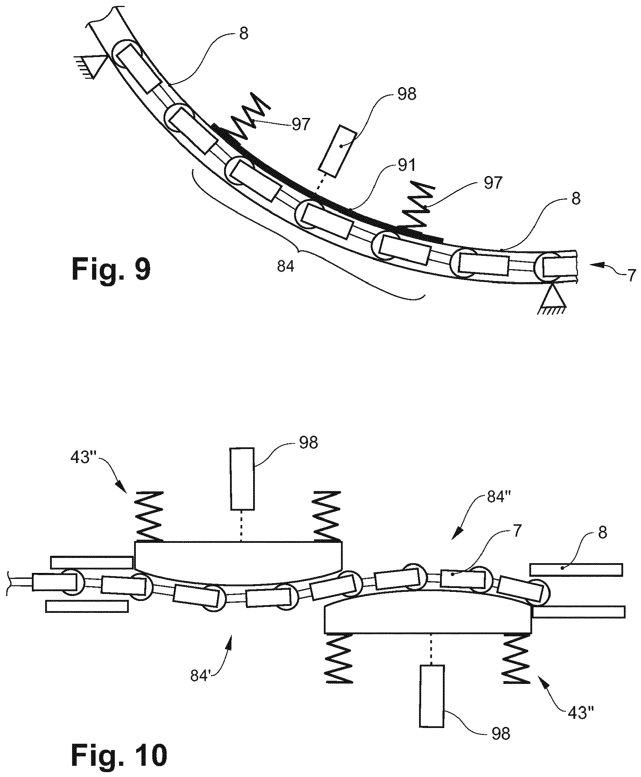

**Figur 9** zeigt schematisch einen Messabschnitt 84 mit einer Messvorrichtung 43 in einem gekrümmten Abschnitt der Förderbahn 8. Das Messprinzip ist dasselbe wie in den bisher gezeigten geraden Abschnitten der Förderbahn 8: bezüglich einer geraden Linie zwischen Anfang und Ende des Messabschnitts 84 wird das Förderorgan 7 ausgelenkt. Bei dieser Ausführungsform findet keine Auslenkung des Förderorgans 7 zusätzlich zu Krümmung statt, welche durch die Umlenkung im gekrümmten Abschnitt ohnehin erforderlich ist.

**Figur 10** zeigt schematisch zwei Messabschnitte, einen ersten Messabschnitt 84' mit einer ersten Messvorrichtung 43' und einen zweiten Messabschnitt 84" mit einer zweiten Messvorrichtung 43". Die beiden Messabschnitte 84', 84" überlappen einander in Längsrichtung respektive Förderrichtung der Förderbahn 8. Die beiden Messvorrichtungen 43', 43" wirken von gegenüberliegenden Seiten auf das Förderorgan 7 und lenken das Förderorgan 7 in entgegengesetzte Richtungen aus. Zur Bestimmung der Spannung des Förderorgans 7 können Messwerte der beiden Messvorrichtungen 43', 43" miteinander kombiniert werden, insbesondere addiert werden. Bei dieser Anordnung muss, für eine vergleichbare Messgenauigkeit, das Förderorgan 7 in jede der beiden entgegengesetzten Richtungen nur halb so weit ausgelenkt werden wie bei einer Auslenkung nur in eine Richtung. Es können kleinere Kraftsensoren verwendet werden. Die Überlappung der Messabschnitte kann auf einen Abstand zwischen Fördergliedern 6 abgestimmt werden, so dass Messsignale der beiden Messabschnitte 84', 84" phasenverschoben sind, insbesondere um eine halbe Phase. Beispielsweise liegen, wenn bei der ersten Messvorrichtung 43' eine Rolle durch dessen Auslenkelement am weitesten ausgelenkt ist, bei der zweiten Messvorrichtung 43" zwei Rollen symmetrisch zum Punkt der weitesten Auslenkung dessen Auslenkelements.

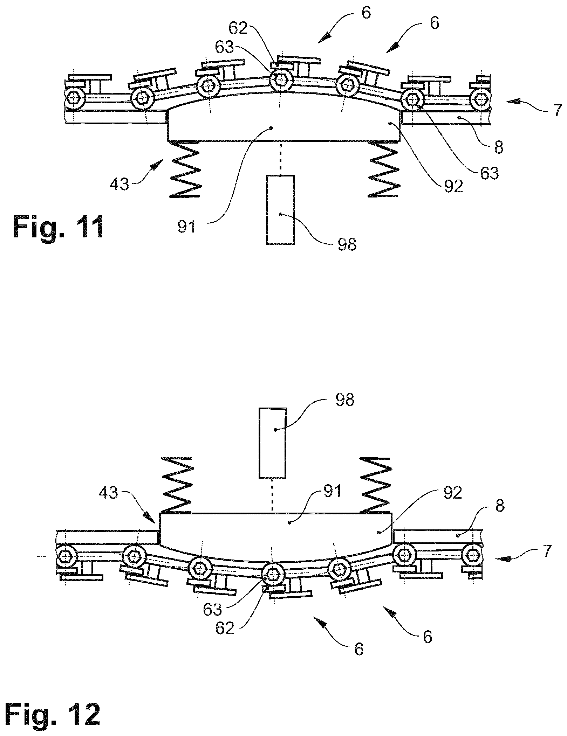

**Figuren 11** und **12** zeigen Messvorrichtungen 43, welche unterhalb oder oberhalb des Förderorgans 7 angeordnet sind. Die Funktionsweise der Messvorrichtung 43 ist dieselbe wie in den vorangegangen Ausführungsformen. Anstelle der Führungsrollen 62 sind es aber die Laufrollen 63, welche auf der Auslenkfläche des Auslenkelements 92 abrollen. Diese Auslenkfläche bildet einen Auslenkbereich 93 des Abrollbereichs 83. Dadurch resultiert, entsprechend einer Zugkraft im Förderorgan 7 und einer Lastkomponente, eine Kraft der Förderglieder 6 gegen das Messelement 91. Bei der Berechnung der Zugspannung ist zu berücksichtigen, dass Messwerte der gemessenen Normalkraft Fm nebst einer Komponente, im Folgenden Zugkraftkomponente genannt, welche durch die Zugkraft Fz hervorgerufen wird, auch eine Lastkomponente aufweisen. Die Lastkomponente entspricht dem Gewicht der an Auslenkelement 92 respektive Messelement 91 anliegenden Förderglieder 6 und der damit verbundenen Förderelemente und damit geförderten Last. In der Ausführungsform der **Figur 11** ist die Normalkraft Fm gleich der Summe von Lastkomponente und Zugkraftkomponente. In der Ausführungsform der **Figur 12** ist die Normalkraft Fm gleich der Zugkraftkomponente minus der Lastkomponente. Bei bekannter Lastkomponente lässt sich die Zugkraftkomponente und damit die Zugkraft aus der gemessenen Normalkraft Fm bestimmen.

In Ausführungsformen kann ein konstanter Wert für die Lastkomponente eingesetzt werden.

In weiteren Ausführungsformen, nicht dargestellt, kann, analog zur Ausführungsform der **Figur 10****,** eine erste Messvorrichtung 43' oberhalb und eine zweite Messvorrichtung 43" unterhalb des Förderorgans 7 angeordnet sein. Die Summe der gemessenen Normalkräfte der beiden Messvorrichtungen 43', 43" ist gleich der Summe der Zugkraftkomponenten in den beiden Messvorrichtungen 43', 43" und ist unabhängig von der Lastkomponente.

In allen verschiedenen Ausführungsformen können die Messwertgeber 98 berührungslose Distanzmesser sein, insbesondere induktive oder kapazitive oder magnetische Distanzmesser. Es können einer oder mehrere Messwertgeber 98 vorliegen.

Um Nichtlinearitäten zwischen Sensordaten und der gemessenen Distanz auszugleichen, kann eine Mess-Kompensation durchgeführt werden, welche aufgrund einer Kennlinie, welche Distanz und Sensordaten zueinander in Beziehung setzt, aus den Sensordaten die gemessene Distanz bestimmt.

Beispielsweise ist die Messvorrichtung 43 dazu ausgelegt, Normalkräfte bis 1'600 N zu messen. Beispielsweise ist die Messvorrichtung 43 dazu ausgelegt, Zugkräften von über 2'500 N unbeschadet zu widerstehen. Dabei kann sich das Messelement 91 bezüglich des Referenzelements 94 in einem mechanischen Endanschlag befinden.

Der Messbereich für die Zugspannung kann beispielsweise 2'000 N betragen. Eine entsprechende Normalkraft kann 200 N betragen. Eine entsprechende Auslenkung des Messelements 91 bezüglich des Referenzelements 94 kann 50 Mikrometer betragen.

Eine Länge des Messabschnitts 84 beträgt beispielsweise zwischen 300 und 500 oder 1000 Millimeter.

Ein Bereich, in welchem die Auslenkung der Förderglieder 6 stattfindet, liegt beispielsweise zwischen 50% bis 80% oder 100% der Länge des Messabschnitts. Die Auslenkung der Förderglieder durch das Messelement 91 beträgt beispielsweise zwischen 2 und 40 Millimeter, insbesondere zwischen 3 und 30 Millimeter, insbesondere zwischen 5 und 20 Millimeter.

Der Winkel alpha beträgt beispielsweise 1 bis 10 Grad, insbesondere 1.5 bis 8 Grad, insbesondere 2 bis 6 Grad.

Eine Länge des Förderorgans 7 kann über hundert Meter betragen, oder über 500 Meter oder über einen Kilometer.

Die gemessene Zugkraft kann vor der weiteren Verarbeitung zur Regelung gefiltert werden, insbesondere durch Bildung eines zeitlichen Mittelwertes. Dieser kann periodische Messwertschwankungen ausgleichen, welche sich beim Abrollen der Förderglieder 6 entlang des Messelements 91 ergeben.

## Patentansprüche

1. **Messvorrichtung** (43) zum Erfassen von Messwerten zur Messung einer Zugspannung in einem Fördersystem,
wobei die Messvorrichtung (43) dazu ausgebildet ist,
ein Förderorgan (7) von einem ersten Abschnitt der Messvorrichtung (43) zu einem zweiten Abschnitt der Messvorrichtung (43) zu führen,
eine Auslenkung des Förderorgans (7) bezüglich einer geraden Verbindung zwischen dem ersten und dem zweiten Abschnitt zu bewirken und
Messwerte entsprechend einer Reaktionskraft auf diese Auslenkung zu erfassen, wobei die Messvorrichtung (43) Flächen zum Führen von Rollen des Förderorgans (7) aufweist, eine dieser Flächen eine Auslenkfläche zum Auslenken des Förderorgans (7) ist, die Auslenkfläche an einem Auslenkelement (92) eines Messelements (91) ausgebildet ist, und die Reaktionskraft eine auf das Messelement (91) wirkende Kraft ist.

2. Messvorrichtung (43) gemäss Anspruch 1, wobei die Messvorrichtung (43) einen Führungskanal zum Führen des Förderorgans (7) aufweist.

3. Messvorrichtung (43) gemäss Anspruch 2, wobei der Führungskanal Flächen zum Führen des Förderorgans (7) in horizontaler Richtung aufweist.

4. Messvorrichtung (43) gemäss Anspruch 2 oder 3, wobei der Führungskanal Flächen zum Führen des Förderorgans (7) in vertikaler Richtung aufweist.

5. Messvorrichtung (43) gemäss einem der vorangehenden Ansprüche, wobei die Messvorrichtung (43) zur Zwangsführung des Förderorgans (7) ausgebildet ist.

6. Messvorrichtung (43) gemäss einem der vorangehenden Ansprüche, wobei die Messvorrichtung (43) einen oder mehrere Messwertgeber (98) zur Bestimmung der Messwerte aufweist, und die einen oder mehreren Messwertgeber (98) zur berührungslosen Messung einer Position des Messelements (91) bezüglich eines Referenzelements (94) angeordnet sind.

7. **Fördereinheit,** aufweisend eine Förderbahn (8) mit einem darin geführten Förderorgan (7) und mindestens eine Messvorrichtung (43) gemäss einem der Ansprüche 1 bis 6 zur Messung einer Zugspannung im Förderorgan (7).

8. Fördereinheit gemäss Anspruch 7, wobei das Förderorgan (7) miteinander verkettete Förderglieder (6) aufweist, und ein Förderglied (6) Rollen (62, 63) zur Stützung und zur Führung der Förderglieder (6) in der Förderbahn (8) aufweist.

9. Fördereinheit gemäss Anspruch 8, wobei Rollen, welche am Auslenkelement (92) des Messelements (91) abrollen, Führungsrollen (62) sind, welche eine seitliche Führung der Förderglieder (6) in einer Förderbahn (8) bewirken.

10. Fördereinheit gemäss Anspruch 8, wobei Rollen, welche am Auslenkelement (92) des Messelements (91) abrollen, Laufrollen (63) sind, welche eine stützende Führung der Förderglieder (6) in einer Förderbahn (8) bewirken.

11. Fördereinheit gemäss einem der Ansprüche 7 bis 10, wobei im Betrieb der Messvorrichtung (43) zu jedem Zeitpunkt mindestens zwei Förderglieder (6) mit ihren Rollen (62, 63) am Messelement (91) anliegen

12. Fördereinheit gemäss einem der Ansprüche 7 bis 11, wobei die Förderglieder (6) jeweils Elemente sind von einem Plattenförderer oder Greiferförderer oder Schalenförderer oder Modulbandförderer oder Taschenförderer oder Hängeförderer.

13. **Förderanlage** aufweisend mindestens eine Fördereinheit mit einem Förderorgan (7), mit mindestens einer Messvorrichtung (43a, 43b, 43c, 43d) gemäss einem der Ansprüche 1 bis 6 zur Messung einer Zugspannung im Förderorgan (7), mit mindestens einem Antrieb (21a, 21b, 21c, 21d) und einer Steuerung (9), welche dazu ausgebildet ist, den mindestens einen Antrieb nach Massgabe von Messwerten der mindestens einen Messvorrichtung (43a, 43b, 43c, 43d) zu regeln.
